(19) Europäisches Patentamt
European Patent Office
Office européen des brevets

(11) EP 4 742 086 A1

(12) EUROPEAN PATENT APPLICATION
published in accordance with Art. 153(4) EPC

(43) Date of publication:
13.05.2026 Bulletin 2026/20

(21) Application number: 24863074.1

(22) Date of filing: 20.08.2024

(51) International Patent Classification (IPC):
G06F 40/58 (2020.01)     G10L 13/02 (2013.01)
G06F 40/51 (2020.01)     G06N 3/0475 (2023.01)
G06N 3/094 (2023.01)     G10L 13/08 (2013.01)
G10L 15/26 (2006.01)     G06N 3/0895 (2023.01)
G10L 19/00 (2013.01)

(52) Cooperative Patent Classification (CPC):
G06F 40/51; G06F 40/58; G06N 3/0475;
G06N 3/0895; G06N 3/094; G10L 13/02;
G10L 13/08; G10L 15/26; G10L 19/00

(86) International application number:
PCT/KR2024/012379

(87) International publication number:
WO 2025/053493 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.09.2023  KR 20230117991
29.04.2024  KR 20240056688

(71) Applicant: Samsung Electronics Co., Ltd.
Suwon-si, Gyeonggi-do 16677 (KR)

(72) Inventor: JUNG, Jungho
Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) SERVER DEVICE FOR TRAINING TRANSLATION MODEL, ELECTRONIC DEVICE USING TRAINED TRANSLATION MODEL, AND METHODS THEREFOR

(57) A server device for training a translation model, an electronic device using the trained translation model, and methods therefor are disclosed. The electronic device comprises: a memory for storing actual speech spoken in a first language, first text corresponding to the actual speech, second text, which is the target language corresponding to the first text, a communication unit, and a translation model; and a processor, wherein the processor generates synthesized speech corresponding to the first text, and can train the translation model by using the actual speech, the first text, the synthesized speech and the second text.

FIG. 1

EP 4 742 086 A1

**Description**

[Technical Field]

The disclosure relates to a server device that trains a translation model that performs translation between different types of languages, an electronic apparatus using the translation model, and methods therefor.

[Background Art]

For communication of users having various languages, use of translation models that perform translation between different languages is increasing. In particular, there is a growing interest in multi language models that perform translation for two or more languages.

A conventional language model used a step by step method (a cascaded method). By a cascaded method, two translation models are involved, and thus a problem of error propagation and a problem of latency were generated. Accordingly, a need for an end-to-end model arose for resolving the problems of errors and accuracy of translation.

However, even in the case of using an end-to-end model, there is a disadvantage that pairs of data of actually uttered speeches and text data of a source language are scarce. Accordingly, training for a translation model is difficult, and thus a solution to this problem is needed.

[Disclosure of Invention]

[Solution to Problem]

A server device according to at least one embodiment of the disclosure includes a processor and memory. The processor may generate a synthesized speech corresponding to a text of an actual speech uttered in a first language, and train the translation model by using the actual speech uttered in the first language, a first text corresponding to the actual speech, a synthesized speech corresponding to the first text corresponding to the actual speech uttered in the first language, and a second text which is a target language corresponding to the first text.

An electronic apparatus according to another embodiment of the disclosure includes a microphone, a communicator, a display, memory storing a VQ codebook trained based on actual speeches and synthesized speeches, and a processor. The processor may, based on receiving input of a speech signal in a first language through the microphone, extract index information of feature information corresponding to the speech signal among feature information recorded in the VQ codebook, and transmit the index information to a server device through the communicator, and based on information about a text in a second language corresponding to the index information being transmitted from the server device, control the display to display the text in the second language.

A method for training a translation model of a server device according to still another embodiment of the disclosure may include the steps of generating a synthesized speech based on a first text corresponding to an actual speech uttered in a first language, and training a translation model by using the actual speech, the first text, the synthesized speech, and a second text which is a target language corresponding to the first text.

[Brief Description of Drawings]

FIG. 1 is a diagram for illustrating an operation of translating by using a translation model in at least one electronic apparatus according to the disclosure;
FIG. 2 is a block diagram for illustrating a configuration of a server device according to at least one embodiment of the disclosure;
FIG. 3 is a diagram for illustrating an example of a method for training a translation model in a server device;
FIG. 4 is a block diagram illustrating a configuration of an electronic apparatus according to at least one embodiment of the disclosure;
FIG. 5 is a flow chart for illustrating a method for training a translation model of a server device according to at least one embodiment of the disclosure;
FIG. 6 is a flow chart for illustrating a process of translating in a server device according to at least one embodiment of the disclosure; and
FIG. 7 is a flow chart for illustrating a process of translating in an electronic apparatus according to at least one embodiment of the disclosure.

[Mode for Invention]

Various modifications may be made to the embodiments of the disclosure, and there may be various types of embodiments. Accordingly, specific embodiments will be illustrated in drawings, and the embodiments will be described in detail in the detailed description of the disclosure. However, it should be noted that the various embodiments are not for limiting the scope of the disclosure to a specific embodiment, but they should be interpreted to include various modifications, equivalents, and/or alternatives of the embodiments of the disclosure. In addition, with respect to the detailed description of the drawings, similar components may be designated by similar reference numerals.

Also, in describing the disclosure, in case it is determined that detailed explanation of related known functions or features may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, the terms used in the disclosure are used only to explain specific embodiments, and are not intended to limit the scope of the disclosure. Also, singular expressions include plural expressions, unless defined obviously differently in the context.

In addition, in the disclosure, expressions such as "have," "may have," "include," and "may include" denote the existence of such characteristics (e.g.: elements such as numbers, functions, operations, and components), and do not exclude the existence of additional characteristics.

Also, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

In addition, the expressions "first," "second," and the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Also, in the embodiments of the disclosure, 'a module' or 'a unit' may perform at least one function or operation, and may be implemented as hardware or software, or as a combination of hardware and software. In addition, a plurality of 'modules' or 'units' may be integrated into at least one module and implemented as at least one processor, excluding 'a module' or 'a unit' that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, embodiments according to the disclosure will be described in detail with reference to the accompanying drawings to the extent that those having ordinary skill in the art to which the disclosure belongs can easily carry out the embodiments.

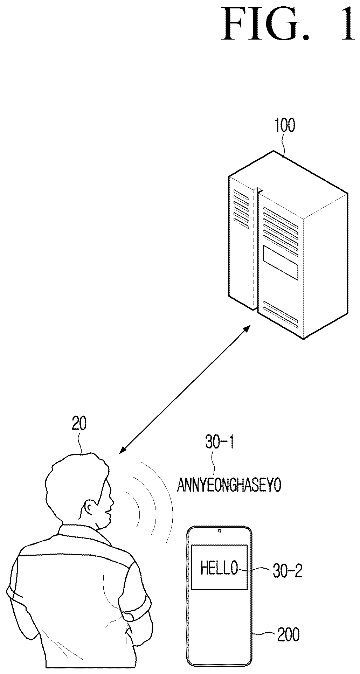

FIG. 1 is a diagram for illustrating a translation method according to at least one embodiment of the disclosure. FIG. 1 illustrates a state wherein a server device 100 and an electronic apparatus 200 perform communication with each other.

The electronic apparatus 200 may perform translation between different languages by using a translation model. FIG. 1 illustrates a case wherein, if a user utters in Korean (i.e., a source language), its content is translated into English (i.e., a target language).

Specifically, FIG. 1 illustrates an embodiment wherein, if the user 20 utters a speech 30-1 which is "Annyeonghaseyo" in Korean, the electronic apparatus 200 receives input of the uttered speech through a microphone, and displays "Hello" 30-2 which is a translation text in English which is a target language on a display of the electronic apparatus 200.

In the embodiment, a case wherein the source language uttered by the user 20 is Korean, and the target language is English was illustrated, but the source language and the target language may vary diversly. A language uttered by the user 20 and a language into which the language uttered by the user 20 was translated, i.e., a source language and a target language are not limited to languages of specific types. As an example, there could be a case wherein the language uttered by the user 20, i.e., the source language is Russian, and the target language is German. The types of the source language and the target language may vary according to the user's setting. However, for a translation model to perform translation appropriately, learning for translation between various languages should be performed, and for this, in the various embodiments of the disclosure, an amount of training data is increased by using not only actual speeches for a source language but also synthesized speeches together.

For the convenience of explanation, in the disclosure, a source language may be described as a first language, and a target language may be described as a second language.

Also, in FIG. 1, the electronic apparatus 200 was displayed as a mobile phone, but this is just for the convenience of explanation. Accordingly, the electronic apparatus 200 is not limited to a mobile phone, and may be implemented as various apparatuses such as a PC, a laptop PC, a tablet PC, a TV, a kiosk, a wireless speaker, a robot, etc.

If a speech of the first language uttered by the user 20 is input through the microphone, the electronic apparatus 200 may obtain a text in the second language by using a translation model. The electronic apparatus 200 may display the obtained text as it is like in FIG. 1, or output it through a speaker in a form of an electronic speech.

According to the various embodiments of the disclosure, the translation model may be a model that was trained by a method of using not only actual speeches but also synthesized speeches together as training data. A detailed training method will be described in the parts described below.

Meanwhile, the trained translation model may be mounted on the electronic apparatus 200, or mounted on an external device. Alternatively, some of software modules constituting the translation model may be mounted on the electronic apparatus 200, and another software module may be mounted on an external device.

FIG. 1 illustrates a case wherein the translation model is mounted on the server device 100.

As an example, the user 20 may utter a sentence which is "Annyeonghaseyo" 30-1 while the electronic apparatus 200 is placed nearby. The electronic apparatus 200 transmits the speech data uttered by the user 20 to the server device 100. The server device 100 may obtain a text in the second language by inputting the received speech data into the translation model.

If the target language is set as English, the server device 100 may transmit a text which is "Hello" 30-2 to the electronic apparatus 200. In case the target language is set as French, the server device 100 may transmit a text which is "Bonjour." In case the translation model is implemented as a multi language model, even if the first language is input in a language of another country which is not Korean, if the second language is set as French, the server device 100 may transmit an index of a text which is "Bonjour."

Meanwhile, in case the electronic apparatus 200 includes at least some of the software modules of the translation model, the electronic apparatus 200 may not transmit the speech data uttered by the user itself to the server device 100, but transmit a result value processed by the software modules. As an example, in case a VQ codebook trained by actual speeches and synthesized speeches is stored, the electronic apparatus 200 may search a feature vector corresponding to a speech uttered by the user in the VQ codebook, and transmit an index for the searched feature vector to the server device 100. The server device 100 may transmit a text in the second language corresponding to the received index, and the electronic apparatus 200 may display the transmitted text in the second language.

A vector quantization (VQ) codebook is used after a step of extracting feature vectors of a plurality of speech segments included in a speech signal uttered by the user, and may be a database of feature information (i.e., speech feature vectors) that was vector quantized.

Meanwhile, as in another example, if the electronic apparatus 200 stores a translation model in itself, the electronic apparatus 200 may perform the aforementioned translation operation by using the translation model even when communication with the server device 100 is not connected. In FIG. 1, an embodiment wherein a translated text is displayed on the display of the electronic apparatus 200 was illustrated, but this is merely an example, and the electronic apparatus 200 may output a translated text as a speech by using a text to sound (TTS) module.

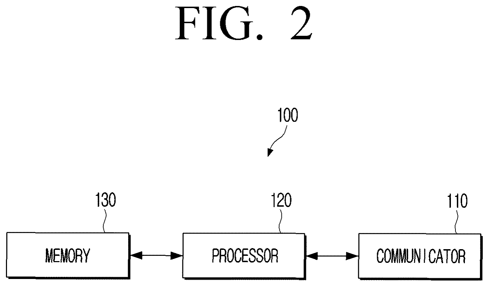

FIG. 2 is a block diagram for illustrating a configuration of the server device 100 according to at least one embodiment of the disclosure. According to FIG. 2, the server device 100 may include a communicator 110, memory 130, and a processor 120.

The communicator 110 is a component for performing communication with various types of external devices. The communicator 110 may include at least one wireless communication module, at least one wired communication module, etc. Each communication module may be implemented in a form of at least one hardware chip. As an example, a wireless communication module may include at least one module among a Wi-Fi module, a Bluetooth module, an infrared communication module, or other communication modules. Other than the above, the communicator 110 may include at least one communication chip that performs communication according to various wireless communication protocols such as Zigbee, 3rd Generation (3G), 3rd Generation Partnership Project (3GPP), Long Term Evolution (LTE), LTE Advanced (LTE-A), 4th Generation (4G), 5th Generation (5G), etc. A wired communication module may include, for example, at least one of a local area network (LAN) module, an Ethernet module, a pair cable, a coaxial cable, an optical fiber cable, or an ultra wide-band (UWB) module.

The memory 130 may include an operating system (OS) for controlling the overall operations of the components of the server device 100, and instructions or data related to the components of the server device 100.

The memory 130 may store various types of programs and data, etc. for operations of a translation learning model at the server device 100. Specifically, the memory 130 may store various software modules such as a subsampler, a database of feature vectors such as a VQ codebook, an encoder, a discriminator module, a regularization module, a decoder, etc. Alternatively, the memory 130 may store a synthesized speech generation module for generating synthesized speeches, a learning module for training a translation model, etc.

The memory 130 may be implemented in various forms such as volatile memory (e.g.: dynamic RAM (DRAM), static RAM (SRAM), or synchronous dynamic RAM (SDRAM), etc.), non-volatile memory (e.g.: one time programmable ROM (OTPROM), programmable ROM (PROM), erasable and programmable ROM (EPROM), electrically erasable and programmable ROM (EEPROM), mask ROM, flash ROM, flash memory (e.g.: NAND flash or NOR flash, etc.), a hard drive, or a solid state drive (SSD)), etc.

Also, although each component is FIG. 2 was illustrated one by one, at least one of the communicator 110, the processor 120, or the memory 130 may be implemented as a plurality of components according to the type or the design specification of the server device 100. Also, some memories 130 may be in forms of being embedded in the processor 120.

The processor 120 is electrically connected with the communicator 110 and the memory 130, and controls the overall operations of the server device 100 by using the various types of instructions or programs stored in the memory 130. According to an embodiment, the processor 120 may train the translation model.

For training of the translation model, the processor 120 may be provided with data regarding an actual speech uttered in the first language, a text corresponding to the actual speech, and a second text in the second language, i.e., the target language corresponding to the first text. For the convenience of explanation, a text corresponding to an actual speech may be referred to as the first text, and a text in the target language may be referred to as the second text. As an example, if the first text is "Annyeonghaseyo," the second text may be "Hello."

The processor 120 may receive inputs of an actual speech, and a first text, a second text, etc. directly through various input means such as a microphone or a keyboard, a mouse, a joystick, etc., and store them in the memory 130. Alternatively, the processor 120 may receive data such as an actual speech, and the first text, the second text, etc. from an external device, etc. through the communicator 110.

The processor 120 may generate a synthesized speech corresponding to the first text. Generation of a synthesized speech may be performed by various methods. As an example, the processor 120 may generate a synthesized speech by using methods such as waveform synthesis, generation of a statistical parameter, a speech synthesis system (ASR-TTS), and deep learning-based speech conversion, etc. However, such generation methods are merely examples, and the disclosure is not limited thereto. Also, as a method of generating a synthesized speech is a known technology, explanation regarding the generation method will be omitted.

The processor 120 trains the translation model by using an actual speech, the first text, a synthesized speech, and the second text. In this case, the purpose for training may be set as a first purpose of making a difference between an output value of the translation model for the actual speech and an output value of the translation model for the synthesized speech become smaller than a predetermined threshold value, and a second purpose of making feature information according to the actual speech and feature information according to the synthesized speech distinguished for each text in the first language, etc. Based on first and second loss functions for achieving such purposes, the processor 120 trains the translation model in a direction wherein each loss function is reduced.

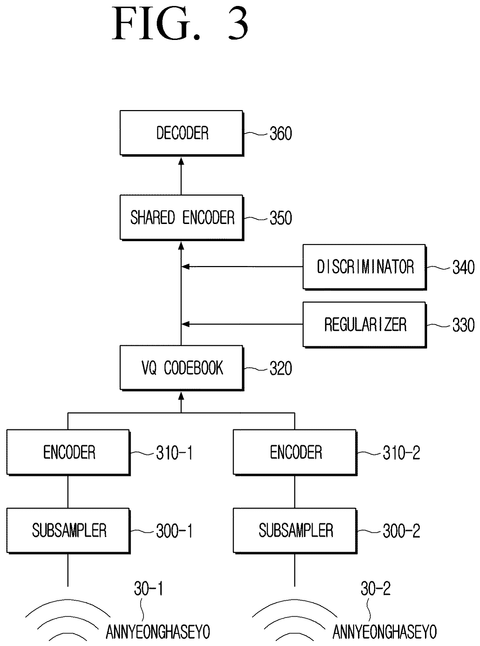

FIG. 3 is a configuration for illustrating a training method of a translation model by a server device according to at least one embodiment of the disclosure.

According to FIG. 3, the memory 130 stores various software modules such as a plurality of encoders and subsamplers 310-1, 300-1, 310-2, 300-2, a VQ codebook 320, a regularizer module 330, a discriminator module 340, a shared encoder 350, a decoder 360, etc.

One encoder and one subsampler 310-1, 300-1 may be software modules for an actual speech, and another encoder and another subsampler 310-2, 300-2 may be software modules for a synthesized speech.

The encoder and the subsampler 310-2, 300-2 for a synthesized speech, the regularizer module 330, and the discriminator module 340 may be software modules provided for training of the translation model. For the convenience of explanation, the encoder and the subsampler 310-1, 300-1 for an actual speech will be referred to as a first encoder and a first subsampler, and the encoder and the subsampler 310-2, 300-2 for a synthesized speech will be referred to as a second encoder and a second subsampler.

The encoder and the subsampler 310-1, 300-1 for an actual speech, the VQ codebook 320, the shared encoder 350, and the decoder 360 may constitute the translation model.

FIG. 3 was illustrated based on a case wherein the first language is translated into the second language, but if the types of languages to be translated increase, the number of the encoders and the subsamplers may also increase. For example, in the case of a model that translates Korean into English, each one of an encoder and a subsampler for processing an actual speech uttered in Korean, and each one of an encoder and a subsampler for processing a synthesized speech are required. Meanwhile, in case a model that translates French into Korean is also added, each one of an encoder and a subsampler for processing an actual speech uttered in French, and each one of an encoder and a subsampler for processing a synthesized speech of a text in French are additionally required.

The processor 120 samples an actual speech signal by using the first subsampler 300-1, and encodes the actual speech sampled in the first subsampler 300-1 by using the first encoder 310-1.

Also, the processor 120 samples a synthesized speech signal by using the second subsampler 300-2, and encodes the synthesized speech sampled in the second subsampler 300-2 by using the second encoder 310-2. A synthesized speech signal may be directly generated from the first text by using a TTS module (not shown), or may be provided from an external device.

The processor 120 repeatedly trains the translation model until similarity between an output value of the translation model for the actual speech encoded in the first encoder 310-1 and an output value of the translation model for the synthesized speech encoded in the second encoder 310-2 becomes greater than or equal to the predetermined threshold value.

In other words, in training of the translation model, training only with actually uttered speeches is practically difficult as data is insufficient, and thus effective training of the translation model may be promoted by training the translation model by generating synthesized speeches.

For training of the translation model, an actual speech uttered in the first language, a first text corresponding to the actual speech, and a second text which is the target language corresponding to the first text are required. Here, a synthesized speech may be generated by models such as Tacotron2 or Fastspeech2, etc. However, these models are merely some of the embodiments of the disclosure, and the processor 120 may generate a synthesized speech by using various methods other than them.

As the obtained actual speech uttered in the first language and synthesized speech of the first text are in forms of analog signals, processing into digital signals is required. The actually uttered speech may go through a process of being converted into a frequency unit through Fourier Transform, and the conversion may be performed through the subsamplers and the encoders 310-1, 300-1, 310-2, 300-2. The subsamplers may perform downsampling. In the case of a speech signal, there are generally thousands to hundreds of thousands of samples per second, and thus a lot of resources may be required in processing and storing a speech signal. Accordingly, for effective processing, it may be required to downsample a speech signal.

The processor 120 may sample the actual speech and the synthesized speech by using the plurality of subsamplers 300-1, 300-2 and then convert them into digital signals, and obtain feature information for each digital signal by using the encoders 310-1, 310-2. The feature information may be in a form of including feature vectors or a list of the vectors.

Specifically, in case an actual speech to be translated and a synthesized speech were obtained, the processor 120 may divide each speech into at least one speech segment by using a voice activity detection (VAD) technology. The processor 120 may encode speech segments divided from each speech by using the encoders 310-1, 310-2, and obtain their feature information. An encoding result of the encoders 310-1, 310-2 in FIG. 3 may be referred to as an output of the encoders. The output of the encoders may be expressed as hidden layer vectors. The processor 120 may extract feature information (i.e., feature vectors) by the same method for the synthesized speech as well as for the actual speech.

Meanwhile, as feature vectors which are encoding result values of each of an actual speech and a synthesized speech have a very high degree of freedom, there is a need to change them into discrete forms. In other words, for expressing changed discrete forms, the vector quantization (VQ) codebook 320 may be required.

In a speech recognition process, vector quantization may be a method of enabling a function of compressing data by making a feature vector of a recognized speech correspond to the closest vector within the codebook and a search function of finding out a group to which the speech feature vector should belong.

In other words, feature vectors which are results of encoding each of an actually uttered speech and a synthesized speech may correspond to code words within the VQ codebook. Here, the code words mean at least one vector within the VQ codebook.

The processor 120 may update the feature vectors extracted from an actually uttered speech and a synthesized speech to code words within the VQ codebook. In this case, in order that translation results based on the actual speech and the synthesized speech can become similar, the processor 120 proceeds with training based on the aforementioned first loss function and second loss function.

The processor 120 may train the translation model by updating the VQ codebook such that the feature vectors of the actual speech and the synthesized speech correspond to similar code words based on a method based on generative adversarial networks (GAN).

In the case of being based on a method based on generative adversarial networks (GAN), the processor 120 may use a generator module (not shown) and a discriminator module 340.

The discriminator module 340 is a software module that is trained to distinguish whether an input speech is an actually uttered speech or a synthesized speech, and the generator module is a software module that is trained to make feature information of an actual speech and feature information of a synthesized speech similar to a degree that the discriminator module cannot determine that the synthesized speech is a synthesized speech.

In other words, the discriminator module 340 is trained so as to, according to input of a speech, determine whether the input speech is an actually uttered speech or a synthesized speech, and if the input speech is not an actually uttered speech, determine the current learning result as mismatch, and if the input speech is an actually uttered speech, determine the current learning result as match.

In FIG. 3, the processor 120 extracts a code word corresponding to a feature vector extracted from an actual speech from the VQ codebook 320, and extracts a code word corresponding to a feature vector extracted from a synthesized speech from the VQ codebook 320. Not only feature vectors but also code words may be included in the aforementioned feature information.

The processor 120 may update the VQ codebook by generating feature information that was adjusted such that a difference in features of the actual speech and the synthesized speech becomes smaller than the predetermined threshold value based on feature information corresponding to the actual speech and feature information corresponding to the synthesized speech. In this case, the discriminator module 340 may be used.

The processor 120 may input a first output value of the translation model that received input of the actual speech, and a second output value of the translation model that received input of the synthesized speech into the discriminator module 340. The discriminator module 340 may output a value corresponding to a difference between the first output value and the second output value. The processor 120 may reupdate the VQ codebook 340 included in the translation model by comparing the output value of the discriminator module 340 and the threshold value until the output value of the discriminator module 340 becomes smaller than the threshold value.

By such training, a difference between feature information corresponding to the actual speech and feature information corresponding to the synthesized speech becomes smaller than the predetermined threshold value, and the feature information may become similar.

The processor 120 may increase the similarity of translation results of each of the actual speech and the synthesized speech by repeatedly performing the aforementioned comparing and updating operations by using the discriminator module 340 and the generator module that perform operations opposite to each other.

An example of the first loss function that makes a difference between an output value of the translation model for an actual speech and an output value of the translation model for a synthesized speech become smaller than the predetermined threshold value may be set as follows.

<Formula 1>

$$\mathcal{L}_{GAN} = \sum_{i} [\log D\left(f_a\left(x_a^i\right)\right) + \log(1 - D\left(f_s\left(x_s^i\right)\right))]$$

In the first loss function $L_{GAN}$ (i.e., a GAN loss function), D means an output value of the discriminator module, $f_s$ means an encoder output value of the synthesized speech, $f_a$ means an encoder output value of the actual speech, $x_a$ means the actual speech, and $x_s$ means the synthesized speech.

The processor 120 may perform training such that feature vectors of the actually uttered speech and the synthesized speech have similar values by repeatedly training such that the value of the first loss function as in the formula 1 becomes smaller than or equal to the predetermined value.

By repeating the training process N times, the generator module is trained to generate and output a synthesized speech similar to an actually uttered speech, and the discriminator module is trained in a direction wherein the accuracy of distinguishing an actually uttered speech and a synthesized speech becomes higher.

Meanwhile, in the case of training only by the GAN method, there is a possibility that feature information of synthesized speeches for different texts becomes identical. Accordingly, the processor 120 may update the VQ codebook 320 such that different texts have different feature information by using the regularizer module 330. The regularizer module 330 is a module for learning feature information by dividing the information for each text in the first language.

The processor 120 may input a first output value obtained by actual speeches for each text in the first language and a second output value obtained by a synthesized speech into the regularizer module 330. The processor 120 may update the VQ codebook 320 such that each text has different feature information based on an output value of the regularizer module 330.

Specifically, the regularizer module 330 may operate in a direction wherein the second loss function becomes smaller as follows.

<Formula 2>

$$\mathcal{L}_{contrastive} = - \sum_i \log\left(\frac{S(V_a^i, V_s^i)}{\sum_{k=1,[k!=i]}^N S(V_a^j, V_s^i)}\right)$$

S means a function that calculates cosine similarity between a feature vector of the synthesized speech and a feature vector of the actually uttered speech, and V means a code word within the VQ codebook. Specifically, the regularizer module 330 may prevent model collapse by learning such that a value of $L_{Contrastive}$ becomes smaller than or equal to the predetermined value. Model collapse means a case wherein, in case training is performed by the GAN method, even though texts of different contents are input, they correspond to the same code word of the VQ codebook 320. For example, it means a case wherein, even though texts of different contents, i.e., "annyeonghaseyo" and "beolre-ui segye" were input, they correspond to the same code word in the VQ codebook 320. Training by the second loss function is as follows. As an example, if a text of an actually uttered speech is "annyeong," and a text of a synthesized speech is "mannaseo bangawo," even though "annyeong" and "mannaseo bangawo" are texts having different meanings, they cannot be deemed as texts of totally different meanings in the aspect of similarity of the meanings. Accordingly, the training is training wherein, in case a text of an actually uttered speech and a text of a synthesized speech correspond to code words, they are made to correspond in locations not far from each other. As a result of training by the second loss function described above, even distribution of code words can be provided.

Here, the purpose of the first loss function is making distinction between an actually uttered speech and a synthesized speech difficult, and the purpose of the second loss function is making feature information according to an actual speech and feature information according to a synthesized speech distinguished for each text in the first language, and thus the processor 120 may perform training based on the first and second loss functions in a random order.

In other words, training may be performed by the first loss function, and then training may be performed by the second loss function, or training may be performed by the second loss function, and then training may be performed by the first loss function. Alternatively, training by the first loss function and training by the second loss function may be performed sequentially. Also, after training of the generator module is performed in training by the first loss function, and training of the discriminator module is performed, training of the generator module and the discriminator module may be performed alternately.

The following formula illustrates an example of a third loss function for optimization of the VQ codebook.

<Formula 3>

$$\mathcal{L}_{VQ} = \mathcal{L}_{gumbel-softmax} + \mathcal{L}_{diversity}$$

According to the formula 3, a Gumbel-softmax loss function ($L_{gumbel-softmax}$) and a diversity loss function ($L_{diversity}$) may be added for optimization of the VQ codebook. In the case of using a Gumbel-softmax loss function, a result value converted into a discrete expression ($\hat{Z}$) may become a one-hot vector by the vector quantization (VQ) module. A one-hot vector means a vector wherein 1 is only in a location of a corresponding item, and the other items are filled with 0. As an example, "an apple" may be [1,0,0,0], and "a strawberry" may be expressed as [0,1,0,0].

Also, a diversity loss function can prevent intensive selection of only a specific index in the VQ codebook. A diversity loss function is a function that makes training performed in a direction wherein a distance between code words is maximized, when feature vectors correspond to the VQ codebook.

The aforementioned training method is identical also in a case of performing training for newly-coined words. As an example, even in the case of wishing to add newly-coined words to a translation model, it may be practically impossible to perform training with actually uttered speeches of people for all newly-coined words. Accordingly, the processor 120 may generate synthesized speeches for texts of newly-coined words by using the TTS module. The processor 120 may perform update such as extracting feature information of the generated synthesized speeches by the aforementioned method, and adding the information to the VQ codebook. In case the VQ codebook was trained for newly-coined words, if the user 20 input a newly-coined word by uttering the word near the microphone of the electronic apparatus 200, a code word stored in the VQ codebook may be extracted by a synthesized speech. Accordingly, even if training is not performed again whenever a newly-coined word is generated by uttering the word directly, training may proceed based on the synthesized speech thereof, and thus a translation service for newly-coined words can be provided swiftly.

As described above, the processor 120 may train a translation model including the VQ codebook 320 by updating the VQ codebook 320 by using actual speeches and synthesized speeches.

When training for the VQ codebook 320 is completed, the processor 120 may perform training for the entire translation model including the shared encoder 350, the decoder 360, etc.

In other words, as described above, the translation model may be implemented in a form of including the first sub sampler 300-1, the first encoder 310-1, the VQ codebook 320, the shared encoder 350, and the decoder 360.

The shared encoder 350 may encode a speech based on feature information included in the VQ codebook.

The decoder 360 may extract a text in the second language by decoding a feature vector output from the shared encoder 350. The decoder 360 may extract a text corresponding to the feature vector by using dictionary data provided separately. Meanwhile, although the component is described as the decoder 360, it may also be a shared decoder.

The processor 120 may perform training for the entire translation model including the shared encoder 350 and the decoder 360 by inputting training data including an actual speech, a synthesized speech, a text in the first language, a text in the second language, etc., while update of the VQ codebook 320 was completed.

The translation model trained as above may be used in translation between multi languages. Such a translation model may be used in a state of being mounted on the server device 100, but is not necessarily limited thereto, and it may be directly mounted on the electronic apparatus 200, or may be used while being mounted on a server device of a different type other than the server device 100 that performed training. In this case, the processor 120 may transmit the translation model that completed training to the electronic apparatus 200 or other external devices through the communicator 110.

Alternatively, only some software modules inside the translation model or the VQ codebook 320 may be mounted on the electronic apparatus 200, and translation may be performed by interlocking between the electronic apparatus 200 and the server device 100. In this case, the processor 120 may support the translation service by transmitting and receiving various types of data and signals with the electronic apparatus 200 through the communicator 110.

Specifically, if it is assumed that there is at least one electronic apparatus wherein a translation model including the VQ codebook is installed, the processor 120 may receive index information transmitted by the electronic apparatus through the communicator 110. The index information will be explained in detail in the parts described below.

When the index information is received, the processor 120 extracts feature information corresponding to the index information from the VQ codebook 320 stored in the memory 130, and obtains a text in the second language corresponding to the extracted feature information by using the shared encoder 350 and the decoder 360. The processor 120 may transmit the obtained text to the at least one electronic apparatus through the communicator 110. The electronic apparatus that received the text may display it or output it as an electronic speech through the speaker.

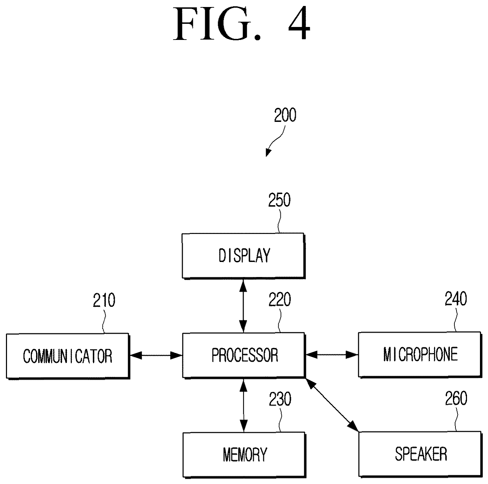

FIG. 4 is a block diagram illustrating a configuration of the electronic apparatus 200 according to at least one embodiment of the disclosure. As described above, the electronic apparatus 200 may be implemented as various apparatuses such as a mobile phone or a PC, a laptop PC, a tablet PC, a TV, a kiosk, a wireless speaker, a robot, etc.

According to FIG. 4, the electronic apparatus 200 includes a communicator 210, a microphone 240, a display 250, memory 230, a speaker 260, and a processor 220. However, the disclosure is not limited thereto, and the electronic apparatus 200 may be implemented in a form wherein some components were excluded, or implemented in a form wherein other components are further included. As detailed examples of the communicator 210, the processor 220, and the memory 230 were described in FIG. 2, overlapping explanation will be omitted.

The microphone 240 may receive input of an uttered speech in case the user 20 uttered an actual speech. The microphone 240 may be activated by control by the processor 220, and receive input of a speech signal uttered by the user 20 and other various audio signals. Here, activation may include overall operations of applying power to the microphone 240, and loading software for performing a microphone function on the memory 230 and executing it.

An actual speech is not necessarily limited to a speech that the user 20 uttered near the electronic apparatus 200, and it may become a speech signal output from other devices such as a speaker or a telephone, etc. Alternatively, it may become music including lyrics, etc.

As an example, the user 20 may utter a speech which is "Annyeonghaseyo" to the microphone 240 of the electronic apparatus 200. The microphone 240 may input the speech "Annyeonghaseyo" uttered by the user 20.

In the memory 230, the translation model including the first sub sampler 300-1, the first encoder 310-1, and the VQ codebook 320, and other software and data may be stored.

The processor 220 may extract feature information from the speech of the user 20 by using the first sub sampler 300-1 and the first encoder 310-1. The processor 220 may obtain index information of a code word corresponding to the extracted feature information based on the VQ codebook 320, and then transmit the obtained index information to the server device 100 through the communicator 210. The index information may be the code word itself, or may be an intrinsic index value, etc. that can identify the code word such as the location of the code word, etc.

As an example, a case wherein a text in the first language uttered by the user 20 is 'beolre-ui segye' may be assumed. In case the target language is English, the target text may be 'world of worms.' The processor 220 may obtain index information corresponding to 'world of worms.' In other words, if an index value of a code word corresponding to 'wor' is 1, an index value of a code word corresponding to 'ld' is 2, an index value of a code word corresponding to 'of' is 3, and an index value of a code word corresponding to 'ms' is 4 in the VQ codebook 320, the processor 220 may generate index information in a form of a list which is [1,2,3,1,4] from the speech 'world of worms.'

The processor 220 transmits the generated index information to the server device 100 through the communicator 210. The server device 100 may transmit data regarding a text in the second language corresponding to the transmitted index information.

When the data regarding the text in the second language is received through the communicator 210, the processor 220 may control the display 250 to display the text in the second language based on the received data.

Alternatively, the processor 220 may convert the received data into an electronic speech signal by using the TTS module, and then output the converted electronic speech signal through the speaker 260.

The speaker 260 is a component for outputting various audio signals according to control by the processor 220.

As an example, in case the user 20 uttered a speech which is "Annyeonghaseyo," if the target language is English, the processor 220 may receive a text which is "Hello" through the communicator 210. The processor 220 may output a speech which is "Hello" by controlling the speaker 260, or display the text by controlling the display 250.

In the above, a case wherein the processor 220 transmits index information including an index value obtained in the VQ codebook to the server device 100, and then directly receives a text in the second language corresponding to the index information from the server device 100 was explained, but the disclosure is not necessarily limited thereto.

In other words, the processor 220 may receive index information corresponding to a text in the second language from the server device 100 through the communicator 210. Alternatively, in case the entire translation model is stored in the memory 230, the processor 220 may directly finish translation through the VQ codebook stored in the memory 230 without communication with the server device 100.

Among the above, a process of receiving index information based on the VQ codebook and translating may be implemented as follows. As an example, a case wherein one index value among the index information received from the server device 100 is 1 may be assumed. If it is assumed that the vectors of the VQ codebook are a codebook vector 1: [0.1, 0.2, 0.3], a codebook vector 2: [0.5, 0.6, 0.7], and a codebook vector 3: [0.8, 0.9, 0.4], the processor 220 may obtain a vector 1 corresponding to the received index value 1.

The processor 220 may obtain a text in the second language by performing encoding and decoding based on the obtained vector 1: [0.1, 0.2, 0.3].

In the above, various embodiments were explained individually, but each embodiment is not necessarily implemented individually, but they may be combined on the whole or partially with at least one other embodiment and implemented together in one product.

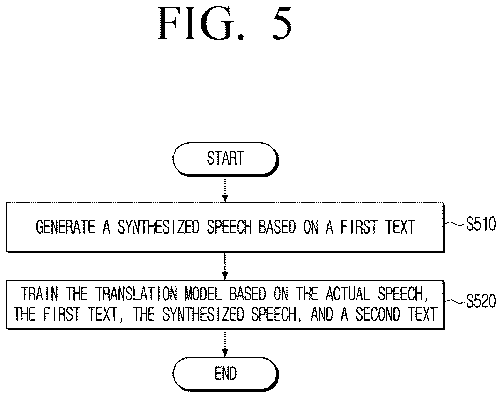

FIG. 5 is a flow chart for illustrating a method for training a translation model of a server device according to at least one embodiment of the disclosure.

According to an embodiment of the disclosure, for training of a translation model by a server device, a synthesized speech may be generated based on a first text in the step S510. For generation of a synthesized speech, a model such as Fastspeech2, etc. may be used as described above. As an example, if an actually uttered speech is "Annyeonghaseyo," and the first text corresponding thereto is stored, the server device may generate a synthesized speech corresponding to the first text by using a model such as Fastspeech2, etc.

After the synthesized speech is generated, the translation model may be trained by the actual speech, the first text, the synthesized speech, and a second text in the step S520. In other words, the translation model may be trained by using the actually uttered speech by the user 20 which is "Annyeonghaseyo," the first text which is "Annyeonghaseyo," a speech wherein the text "Annyeonghaseyo" is synthesized, and the second text which is "Hello" in case the target language is English. As the training method was described in detail above in FIG. 3, explanation regarding the training method will be omitted.

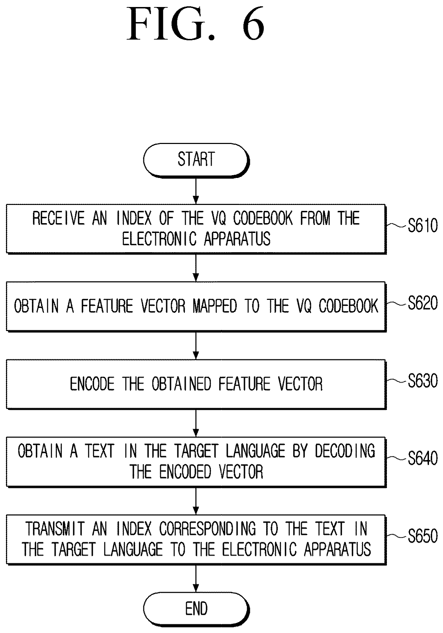

FIG. 6 is a flow chart for illustrating a process of translating in a server device according to at least one embodiment of the disclosure.

The server device 100 may receive index information of the VQ codebook from the electronic apparatus 200 in the step S610.

As an example, if index information for a speech which is "Annyeonghaseyo" is received from the electronic apparatus 200, the server device 100 may obtain a feature vector corresponding to the received index from the VQ codebook of the server device 100 in the step S620. In other words, as the VQ codebooks mounted on the server device 100 and the electronic apparatus 200 are identical, even when only index information was received from the electronic apparatus 200, the server device 100 may obtain a feature vector based on the received index information.

The server device 100 may obtain a text in the target language by processing the obtained feature vector by using the shared encoder and the decoder in the steps S640 and S650. As such a process was explained in detail in the aforementioned parts, overlapping explanation will be omitted.

In case a text in the target language is obtained, the server device 100 may transmit the text in the target language or index information corresponding to the text to the electronic apparatus 100 in the step S650. In FIG. 6 and the above, it was described that the calculation process in the steps S610 to S640 was performed in the server device 100, but the disclosure is not limited thereto, and a case wherein the decoder module and the translation module are mounted on the electronic apparatus 200 and a text translated into the target language is obtained without communication with the server device 100 may also be included.

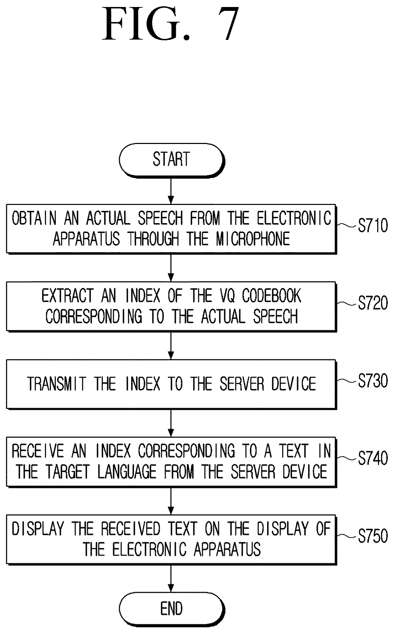

FIG. 7 is a flow chart for illustrating a process of translating in an electronic apparatus according to at least one embodiment of the disclosure.

At the electronic apparatus 200, an actual speech may be obtained through the microphone in the step S710. The electronic apparatus 200 may extract an index of the VQ codebook corresponding to the actual speech in the step S720. As an example, in case the user uttered "Annyeonghaseyo" in the microphone part of the electronic apparatus 200, the speech may correspond to [0.2, 0.3, 0.4] in the VQ codebook. If the vectors of the VQ codebook are a codebook vector 1: [0.1, 0.2, 0.3], a codebook vector 2: [0.5, 0.6, 0.7], and a codebook vector 3: [0.8, 0.9, 0.4], as [0.2, 0.3, 0.4] is closest to the codebook vector 1, it may correspond to the codebook vector 1. In other words, the index value of [0.2, 0.3, 0.4] may be 1 among the VQ codebook vectors. In other words, index information of the VQ codebook corresponding to the actual speech which is "Annyeonghaseyo" may be 1.

The electronic apparatus 200 may transmit the index of the VQ codebook to the server device 200 in the step S730.

The same VQ codebook as the electronic apparatus 200 is mounted on the server device 100, and thus the server device 100 may obtain a feature vector from the VQ codebook based on index information received from the electronic apparatus 200. After obtaining the feature vector, the server device may obtain a text in the target language through a process of encoding and decoding. Accordingly, when the server device transmits the text or index information in that regard, the electronic apparatus 200 may receive it in the step S740.

The electronic apparatus 200 may display the text in the target language through the display or output it through the speaker based on the text translated into the target language or the index information thereof in the step S750. Here, in case the target language is English, the received text may be "Hello." In case the target language is French, the received text is "Bonjour," and there is obviously no limitation on the types of the language.

The various methods explained in FIGS. 5, 6, and 7 can be performed by the server device in FIG. 2 and the electronic apparatus in FIG. 4 described above, but the disclosure is not necessarily limited thereto, and they can be performed by devices having various configurations.

Meanwhile, as explained above, training of a translation model and translation using the translation model may be performed by the processor 120 of the server device or the processor 220 of the electronic apparatus.

These processors 120, 220 may consist of one or a plurality of processors. Each processor 120, 220 may include at least one of a central processing unit (CPU), a graphic processing unit (GPU), or a neural processing unit (NPU), but is not limited to the aforementioned examples of the processor.

A CPU is a generic-purpose processor that can perform not only general operations but also artificial intelligence operations, and it can effectively execute a complex program through a multilayer cache structure. A CPU is advantageous for a serial processing method that enables a systemic linking between the previous calculation result and the next calculation result through sequential calculations. A generic-purpose processor is not limited to the aforementioned examples excluding cases wherein it is specified as the aforementioned CPU.

A GPU is a processor for mass operations such as a floating point operation used for graphic processing, etc., and it can perform mass operations in parallel by massively integrating cores. In particular, a GPU may be advantageous for a parallel processing method such as a convolution operation, etc. compared to a CPU. Also, a GPU may be used as a coprocessor for supplementing the function of a CPU. A processor for mass operations is not limited to the aforementioned examples excluding cases wherein it is specified as the aforementioned GPU.

An NPU is a processor specialized for an artificial intelligence operation using an artificial neural network, and it can implement each layer constituting an artificial neural network as hardware (e.g., silicon). Here, the NPU is designed to be specialized according to the required specification of a company, and thus it has a lower degree of freedom compared to a CPU or a GPU, but it can effectively process an artificial intelligence operation required by the company. Meanwhile, as a processor specialized for an artificial intelligence operation, an NPU may be implemented in various forms such as a tensor processing unit (TPU), an intelligence processing unit (IPU), a vision processing unit (VPU), etc. An artificial intelligence processor is not limited to the aforementioned examples excluding cases wherein it is specified as the aforementioned NPU.

Also, each processor 120, 220 may be implemented as a system on chip (SoC). Here, in the SoC, the memory, and a network interface such as a bus for data communication between the processor and the memory, etc. may be further included other than the one or plurality of processors.

In case the plurality of processors are included in the system on chip (SoC) included in the electronic apparatus 200, the electronic apparatus 200 may perform an operation related to artificial intelligence (e.g., an operation related to learning or inference of the artificial intelligence model) by using some processors among the plurality of processors. As an example, the electronic apparatus 200 may perform an operation related to artificial intelligence by using at least one of a GPU, an NPU, a VPU, a TPU, or a hardware accelerator specialized for artificial intelligence operations such as a convolution operation, a matrix product operation, etc. among the plurality of processors. However, this is merely an example, and the electronic apparatus 200 can obviously process an operation related to artificial intelligence by using the generic-purpose processor such as a CPU, etc.

Also, the processor 120 of the server device 100 may be implemented as a multi core (e.g., a dual core, a quad core, etc.) included in one processor. Accordingly, the processor 120 may perform various tasks such as training of the translation model as described above, or translation using this, etc. In particular, the server device 100 may perform artificial intelligence operations such as a convolution operation, a matrix product operation, etc. by using the multi core included in the processor 120.

The translation model used in the various embodiments of the disclosure may be an end-to-end model. In an end-to-end model, translation is performed based on one model unlike in a cascaded method, and thus the speed of translation can be improved, and error propagation which is a problem of the cascaded method can be reduced. According to the various embodiments of the disclosure, for performing training which is essential in improvement of performance of the translation model, not only actual speeches but also synthesized speeches may be used as training data. Accordingly, the translation model can be trained effectively, and as a result, accuracy of translation can be improved.

An artificial intelligence model may consist of a plurality of neural network layers. At least one layer has at least one weight value, and performs an operation of the layer through the operation result of the previous layer and at least one defined operation. As examples of a neural network, there are a convolutional neural network (CNN), a deep neural network (DNN), a recurrent neural network (RNN), a restricted Boltzmann Machine (RBM), a deep belief network (DBN), a bidirectional recurrent deep neural network (BRDNN), deep Q-networks, and a Transformer, but the neural network in the disclosure is not limited to the aforementioned examples excluding specified cases.

A learning algorithm is a method of training a specific subject device by using a plurality of training data and thereby making the specific subject device make a decision or make prediction by itself. As examples of learning algorithms, there are supervised learning, unsupervised learning, semi-supervised learning, or reinforcement learning, but learning algorithms in the disclosure are not limited to the aforementioned examples excluding specified cases.

Also, a method according to the various embodiments of the disclosure may be provided while being included in a computer program product. A computer program product refers to a product, and it can be traded between a seller and a buyer. A computer program product can be distributed in the form of a storage medium that is readable by machines (e.g.: compact disc read only memory (CD-ROM)), or distributed on-line (e.g.: download or upload) through an application store (e.g.: Play Store™) or directly between two user devices (e.g.: smartphones). In the case of on-line distribution, at least a portion of a computer program product (e.g.: a downloadable app) may be stored in a storage medium such as the server of the manufacturer, the server of the application store, and the memory of the relay server at least temporarily, or may be generated temporarily.

In addition, the method according to the various embodiments of the disclosure may be implemented as software including instructions stored in machine-readable storage media, which can be read by machines (e.g.: computers). The machines refer to apparatuses that call instructions stored in a storage medium, and can operate according to the called instructions, and the apparatuses may include a server device or an electronic apparatus according to the embodiments disclosed herein.

Meanwhile, a storage medium readable by machines may be provided in the form of a non-transitory computer-readable recording medium. Here, the term 'a non-transitory computer-readable recording medium' only means that the recording medium is a tangible device, and does not include signals (e.g.: electromagnetic waves), and the term does not distinguish a case wherein data is stored in the storage medium semi-permanently and a case wherein data is stored temporarily. For example, 'a non-transitory storage medium' may include a buffer wherein data is temporarily stored.

In case an instruction as described above is executed by a processor, the processor may perform a function corresponding to the instruction by itself, or by using other components under its control. An instruction may include a code that is generated or executed by a compiler or an interpreter.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

**Claims**

**1.** A server device comprising:

memory storing an actual speech uttered in a first language, a first text corresponding to the actual speech, a second text which is a second language corresponding to the first text, and a translation model; and
a processor,

wherein the processor is configured to:

> generate a synthesized speech corresponding to the first text, and
> train the translation model by using the actual speech, the first text, the synthesized speech, and the second text.

2. The server device of claim 1,

> wherein the translation model comprises a vector quantization (VQ) codebook including feature information of speeches, and
> the processor is configured to:
> update the VQ codebook by generating feature information that was adjusted such that a difference in features of the actual speech and the synthesized speech becomes smaller than a predetermined threshold value based on feature information corresponding to the actual speech and feature information corresponding to the synthesized speech.

3. The server device of claim 2,

> wherein the memory stores a discriminator module for distinguishing a difference between the actual speech and the synthesized speech, and
> the processor is configured to:
>
> > input a first output value of the translation model that received input of the actual speech, and a second output value of the translation model that received input of the synthesized speech into the discriminator module, and
> > reupdate the VQ codebook included in the translation model by comparing an output value of the discriminator module and the threshold value until the output value of the discriminator module becomes smaller than the threshold value.

4. The server device of claim 3,

> wherein the memory stores a regularizer module for learning the feature information by dividing the information for each text of the first language, and
> the processor is configured to:
> input the first output value and the second output value obtained for each text of the first language into the regularizer module, and update the VQ codebook such that each text has different feature information based on an output value of the regularizer module.

5. The server device of claim 4,
   wherein the memory stores:

> a first subsampler configured to sample an actual speech signal;
> a first encoder configured to encode the actual speech sampled in the first subsampler;
> a second subsampler configured to sample a synthesized speech signal that converted the first text by using a TTS module; and
> a second encoder configured to encode the synthesized speech sampled in the second subsampler, and
> the processor is configured to:
> repeatedly train the translation model until similarity between an output value of the translation model for the actual speech encoded in the first encoder and an output value of the translation model for the synthesized speech encoded in the second encoder becomes greater than or equal to the predetermined threshold value.

6. The server device of claim 5,
   wherein the translation model further comprises:

> a shared encoder configured to encode a speech based on the feature information included in the VQ codebook; and
> a decoder configured to extract a text in the second language by decoding a feature vector output from the shared encoder based on dictionary data, and

the processor is configured to:
train the translation model by using the actual speech and the synthesized speech in a state wherein update of the VQ codebook has been completed.

7.  The server device of claim 6, further comprising:

a communicator,
wherein the processor is configured to:
based on receiving index information from at least one electronic apparatus wherein the translation model including the VQ codebook was installed through the communicator, extract feature information corresponding to the index information from the VQ codebook stored in the memory, and generate a text in the second language corresponding to the extracted feature information by using the shared encoder and the decoder, and transmit the generated text to the at least one electronic apparatus through the communicator.

8.  An electronic apparatus comprising:

a microphone;
a communicator;
a display;
memory storing a VQ codebook trained based on actual speeches and synthesized speeches; and
a processor,
wherein the processor is configured to:

based on receiving input of a speech signal in a first language through the microphone, extract index information of feature information corresponding to the speech signal among feature information recorded in the VQ codebook, and transmit the index information to a server device through the communicator, and based on information about a text in a second language corresponding to the index information being transmitted from the server device, control the display to display the text in the second language.

9.  A method for training a server device for training a translation model, the method comprising:

generating a synthesized speech based on a first text corresponding to an actual speech uttered in a first language; and
training a translation model by using the actual speech, the first text, the synthesized speech, and a second text which is a target language corresponding to the first text.

10. The training method of claim 9,

wherein the translation model comprises a vector quantization (VQ) codebook including feature information of speeches, and
the training comprises:
updating the VQ codebook by generating feature information that was adjusted such that a difference in features of the actual speech and the synthesized speech becomes smaller than a predetermined threshold value based on feature information corresponding to the actual speech and feature information corresponding to the synthesized speech.

11. The training method of claim 10,
wherein the training comprises:

obtaining each of a first output value of the translation model that received input of the actual speech, and a second output value of the translation model that received input of the synthesized speech;
inputting the first output value and the second output value into a discriminator module for distinguishing a difference between the actual speech and the synthesized speech; and
reupdating the VQ codebook included in the translation model by comparing an output value of the discriminator module and the threshold value until an output value of the discriminator module becomes smaller than the threshold value.

12. The training method of claim 11,

wherein the training further comprises:

inputting the first output value and the second output value obtained for each text of the first language into a regularizer module, and updating the VQ codebook such that each text has different feature information based on an output value of the regularizer module.

13. The training method of claim 12,
wherein the training comprises:

sampling an actual speech signal;

encoding the sampled actual speech by using a first encoder;

sampling the synthesized speech that converted the first text by using a TTS module;

encoding the sampled synthesized speech by using a second encoder; and

repeatedly training the translation model until similarity between an output value of the translation model for the actual speech encoded in the first encoder and an output value of the translation model for the synthesized speech encoded in the second encoder becomes greater than or equal to the predetermined threshold value.

14. The training method of claim 13,
wherein the translation model further comprises:

a shared encoder configured to encode a speech based on the feature information included in the VQ codebook; and

a decoder configured to extract a text in the second language by decoding a feature vector output from the shared encoder based on dictionary data, and

the training comprises:

training the translation model by using the actual speech and the synthesized speech in a state wherein update of the VQ codebook has been completed.

15. A non-transitory computer-readable recording medium storing a program for executing a method for training a server device for training a translation model,
wherein the training method comprises:

generating a synthesized speech based on a first text corresponding to an actual speech uttered in a first language; and

training a translation model by using the actual speech, the first text, the synthesized speech, and a second text which is a target language corresponding to the first text.

# FIG. 1

ANNYEONGHASEYO

30-1

HELLO — 30-2

100

20

200

# FIG. 2

100

| 130 | 120 | 110 |
| --- | --- | --- |
| MEMORY | PROCESSOR | COMMUNICATOR |

# FIG. 3

DECODER — 360

SHARED ENCODER — 350

DISCRIMINATOR — 340

REGULARIZER — 330

VQ CODEBOOK — 320

ENCODER — 310-1

ENCODER — 310-2

SUBSAMPLER — 300-1

SUBSAMPLER — 300-2

30-1

30-2

ANNYEONGHASEYO

ANNYEONGHASEYO

# FIG. 4

# FIG. 5

START

GENERATE A SYNTHESIZED SPEECH BASED ON A FIRST TEXT ~S510

TRAIN THE TRANSLATION MODEL BASED ON THE ACTUAL SPEECH, THE FIRST TEXT, THE SYNTHESIZED SPEECH, AND A SECOND TEXT ~S520

END

# FIG. 6

```
                    ┌─────────────┐
                    │    START    │
                    └──────┬──────┘
                           ▼
    ┌──────────────────────────────────────────────┐
    │  RECEIVE AN INDEX OF THE VQ CODEBOOK FROM THE │ ～S610
    │             ELECTRONIC APPARATUS              │
    └──────────────────────┬───────────────────────┘
                           ▼
    ┌──────────────────────────────────────────────┐
    │ OBTAIN A FEATURE VECTOR MAPPED TO THE VQ CODEBOOK │ ～S620
    └──────────────────────┬───────────────────────┘
                           ▼
    ┌──────────────────────────────────────────────┐
    │        ENCODE THE OBTAINED FEATURE VECTOR     │ ～S630
    └──────────────────────┬───────────────────────┘
                           ▼
    ┌──────────────────────────────────────────────┐
    │ OBTAIN A TEXT IN THE TARGET LANGUAGE BY DECODING │ ～S640
    │              THE ENCODED VECTOR               │
    └──────────────────────┬───────────────────────┘
                           ▼
    ┌──────────────────────────────────────────────┐
    │ TRANSMIT AN INDEX CORRESPONDING TO THE TEXT IN │ ～S650
    │ THE TARGET LANGUAGE TO THE ELECTRONIC APPARATUS │
    └──────────────────────┬───────────────────────┘
                           ▼
                    ┌─────────────┐
                    │     END     │
                    └─────────────┘
```

# FIG. 7

```
            ( START )
               │
               ▼
┌─────────────────────────────────────┐
│ OBTAIN AN ACTUAL SPEECH FROM THE     │
│ ELECTRONIC APPARATUS THROUGH THE     │──S710
│ MICROPHONE                           │
└─────────────────────────────────────┘
               │
               ▼
┌─────────────────────────────────────┐
│ EXTRACT AN INDEX OF THE VQ CODEBOOK  │──S720
│ CORRESPONDING TO THE ACTUAL SPEECH   │
└─────────────────────────────────────┘
               │
               ▼
┌─────────────────────────────────────┐
│ TRANSMIT THE INDEX TO THE SERVER     │──S730
│ DEVICE                               │
└─────────────────────────────────────┘
               │
               ▼
┌─────────────────────────────────────┐
│ RECEIVE AN INDEX CORRESPONDING TO A  │──S740
│ TEXT IN THE TARGET LANGUAGE FROM THE │
│ SERVER DEVICE                        │
└─────────────────────────────────────┘
               │
               ▼
┌─────────────────────────────────────┐
│ DISPLAY THE RECEIVED TEXT ON THE     │──S750
│ DISPLAY OF THE ELECTRONIC APPARATUS  │
└─────────────────────────────────────┘
               │
               ▼
            ( END )
```

## INTERNATIONAL SEARCH REPORT

| International application No. |
| --- |
| **PCT/KR2024/012379** |

| A. | CLASSIFICATION OF SUBJECT MATTER |
| --- | --- |

**G06F 40/58**(2020.01)i; **G06F 40/51**(2020.01)i; **G06N 3/0475**(2023.01)i; **G06N 3/094**(2023.01)i; **G10L 13/08**(2006.01)i; **G10L 15/26**(2006.01)i; **G10L 13/02**(2006.01)i; **G06N 3/0895**(2023.01)i; **G10L 19/00**(2006.01)i

According to International Patent Classification (IPC) or to both national classification and IPC

| B. | FIELDS SEARCHED |
| --- | --- |

Minimum documentation searched (classification system followed by classification symbols)

G06F 40/58(2020.01); G06F 18/214(2023.01); G06F 40/40(2020.01); G06N 3/08(2006.01); G10L 13/027(2013.01); G10L 13/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 번역 모델(translation model), 텍스트(text), 언어(language), 학습(learning), VQ 코드북(Vector Quantization codebook)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2021-0028041 A (SAMSUNG ELECTRONICS CO., LTD.) 11 March 2021 (2021-03-11) See paragraphs [0006] and [0041]-[0044]; and claim 1. | 1,9,15 |
| Y | KR 10-2023-0054242 A (SAMSUNG ELECTRONICS CO., LTD.) 24 April 2023 (2023-04-24) See claim 7. | 1,9,15 |
| Y | CN 114360491 A (TENCENT SCIENCE AND TECHNOLOGY (SHENZHEN) LIMITED COMPANY) 15 April 2022 (2022-04-15) See paragraph [0125]; and claims 4 and 12. | 8 |
| Y | KR 10-2569264 B1 (CODIT CORP.) 23 August 2023 (2023-08-23) See paragraph [0290]; and claim 5. | 8 |
| A | KR 10-2020-0144521 A (NEOSAPIENCE, INC.) 29 December 2020 (2020-12-29) See paragraphs [0032]-[0165]; claims 1-6; and figures 1-18. | 1-15 |

☐ Further documents are listed in the continuation of Box C.   ☑ See patent family annex.

| | | |
| --- | --- | --- |
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **13 December 2024** | **15 December 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/012379**

| Patent document cited in search report | | | Publication date (day/month/year) | Patent family member(s) | | | Publication date (day/month/year) |
|---|---|---|---|---|---|---|---|
| KR | 10-2021-0028041 | A | 11 March 2021 | US | 11551675 | B2 | 10 January 2023 |
| | | | | US | 2021-0065690 | A1 | 04 March 2021 |
| KR | 10-2023-0054242 | A | 24 April 2023 | CN | 118119945 | A | 31 May 2024 |
| | | | | EP | 4332960 | A1 | 06 March 2024 |
| | | | | US | 2023-0197059 | A1 | 22 June 2023 |
| | | | | WO | 2023-063569 | A1 | 20 April 2023 |
| CN | 114360491 | A | 15 April 2022 | CN | 114360491 | B | 09 February 2024 |
| KR | 10-2569264 | B1 | 23 August 2023 | | None | | |
| KR | 10-2020-0144521 | A | 29 December 2020 | CN | 111566655 | A | 21 August 2020 |
| | | | | CN | 111566655 | B | 06 February 2024 |
| | | | | CN | 111566656 | A | 21 August 2020 |
| | | | | CN | 111566656 | B | 20 February 2024 |
| | | | | EP | 3739476 | A1 | 18 November 2020 |
| | | | | EP | 3739477 | A1 | 18 November 2020 |
| | | | | JP | 2021-511534 | A | 06 May 2021 |
| | | | | JP | 2021-511536 | A | 06 May 2021 |
| | | | | JP | 2022-153569 | A | 12 October 2022 |
| | | | | JP | 2022-169714 | A | 09 November 2022 |
| | | | | KR | 10-2199050 | B1 | 06 January 2021 |
| | | | | KR | 10-2199067 | B1 | 06 January 2021 |
| | | | | KR | 10-2246943 | B1 | 30 April 2021 |
| | | | | US | 11217224 | B2 | 04 January 2022 |
| | | | | US | 11769483 | B2 | 26 September 2023 |
| | | | | US | 11810548 | B2 | 07 November 2023 |
| | | | | US | 12080273 | B2 | 03 September 2024 |
| | | | | US | 2020-0082806 | A1 | 12 March 2020 |
| | | | | US | 2020-0342852 | A1 | 29 October 2020 |
| | | | | US | 2022-0084500 | A1 | 17 March 2022 |
| | | | | US | 2024-0013771 | A1 | 11 January 2024 |
| | | | | US | 2024-0363098 | A1 | 31 October 2024 |
| | | | | WO | 2019-139428 | A1 | 18 July 2019 |
| | | | | WO | 2019-139431 | A1 | 18 July 2019 |

Form PCT/ISA/210 (patent family annex) (July 2022)